# EUROPÄISCHE PATENTSCHRIFT

(11) **EP 2 895 822 B1**
(45) Veröffentlichungstag und Bekanntmachung des Hinweises auf die Patenterteilung: **10.01.2018**
(21) Anmeldenummer: 13750022.9
(22) Anmeldetag: 12.08.2013
(51) Int. Cl.: G01C 21/36

(54) **KONTAKTANALOGE ANZEIGE INSBESONDERE EINES FAHRSPURWECHSELS**
CONTACT-ANALOGUE DISPLAY, IN PARTICULAR OF A LANE CHANGE
AFFICHAGE À CONTACT ANALOGIQUE, EN PARTICULIER D'UN CHANGEMENT DE VOIE DE CIRCULATION

(30) Priorität: 12.09.2012 DE 102012216144
(43) Veröffentlichungstag der Anmeldung: 22.07.2015
(73) Patentinhaber: Bayerische Motoren Werke Aktiengesellschaft, 80809 München (DE)
(72) Erfinder: MILICIC, Natasa, 80637 München (DE); ISRAEL, Boris, 80337 München (DE)
(86) Internationale Anmeldenummer: PCT/EP2013/066792
(87) Internationale Veröffentlichungsnummer: WO 2014/040808

(56) Entgegenhaltungen:
- EP-A1- 2 159 541
- WO-A1-02/10838
- DE-A1-102010 052 000

## Beschreibung

Die Erfindung betrifft ein Verfahren zur kontaktanalogen Anzeige eines Navigationshinweises für ein Fahrmanöver, insbesondere eines Fahrspurwechsels, eines Fahrzeugs und eine entsprechend eingerichtete Vorrichtung.

Navigationssysteme für Fahrzeuge sind heute weit verbreitet. Mithilfe von Navigationssystemen können dem Fahrer eines Fahrzeugs abhängig von einer Route während des Fahrens Hinweise zum nächsten oder den Fahrmanövern gegeben werden. Diese Hinweise können auf kontaktanaloge Weise (auch als "augmented reality" bezeichnet) dem Fahrer dargeboten werden. Hierzu sind generell Monitore, LCD Anzeigen, Head-Up-Displays oder Head-Mounted-Displays geeignet. Auch eine Projektion der Hinweise auf die Fahrbahn ist denkbar.

Ein Hinweis auf einen Fahrspurwechsel wird heutzutage in einer kontaktanalogen Anzeige durch Linien angezeigt, die zum Navigationsziel führen und den zu fahrenden Pfad auf der Fahrbahn anzeigen oder durch Einzelpfeile, die auf der Fahrbahn liegen und den Punkt des zu fahrenden Manövers fest an diesem Ort markieren.

Ein Nachteil dieser Art den Hinweis anzuzeigen entsteht dann, wenn das Fahrmanöver eigentlich nicht nur an dem anzeigten Ort durchgeführt werden kann, sondern während einer zusammenhängenden Fahrstrecke, die manchmal auch als ein Fahrbereich bezeichnet wird. Die zusammenhängende Fahrstrecke beziehungsweise der Bereich umfasst dabei eine größere Strecke beziehungsweise einen größeren Bereich, als sie beziehungsweise er typischerweise beispielsweise für Abbiegevorgänge durch die Straßenkonstruktion und -markierung vorgegeben ist. Es handelt sich beispielsweise um eine Fahrstrecke, die allgemein von Fahrern so betrachtet wird, dass sie ihnen die Wahl lässt, wann das Manöver auszuführen ist. Durch die feste Markierung an einem Ort kann sich der Fahrer unter Druck gesetzt fühlen, das Manöver genau an diesem Ort durchführen zu müssen, gegebenenfalls auch davon getrieben, dass er den Navigationshinweis ansonsten nicht mehr sieht, weil er nicht mehr angezeigt wird. Dies kann dazu führen, dass sich der Fahrer nicht verkehrsgerecht verhält und sich nicht die Zeit nimmt, die zur Durchführung eines sicheren Fahrmanövers erforderlich wäre, beispielsweise auf einen Schulterblick verzichtet. Dokument WO 02/10838 A1 offenbart ein Navigationsverfahren in einem Kraftfahrzeug, das dazu dient einen Pfeil als Richtungshinweis auf einer Windschutzscheibe in Abhängigkeit von Signalen einer Blickrichtungserkennung darzustellen. Bei Annäherung an eine zu wählende Abzweigung wandert der Pfeil in Richtung der Abzweigung.

Dokument DE 10 2010 052 000 A1 offenbart ein Verfahren zur Ausgabe von Navigationshinweisen, wobei grafische Linienobjekte spurgenau in Kartenausschnitte eingezeichnet werden und die aktuelle Entfernung eines Kraftfahrzeugs von Aktionspunkt durch ein entlang dem ersten Linienobjekt angeordnete Entfernungsmarkierung schritthaltend mit der Positionsveränderung des Kraftfahrzeugs graphisch markiert wird.

Dokument EP 2 159 541 A1 offenbart eine Navigationsvorrichtung, die dazu eingerichtet ist, ein Routenführungsobjekt auf kontaktanaloge Weise in einer Fotographie anzuzeigen.

Aufgabe der Erfindung ist es einen Navigationshinweis bereit zu stellen, der für ein Fahrmanöver, das nicht nur an einem Ort durchgeführt werden kann, die oben genannten Nachteile beseitigt.

Die Aufgabe der Erfindung wird durch ein Verfahren nach Anspruch 1 und durch eine Vorrichtung nach Anspruch 7 gelöst.

Offenbart wird ein Verfahren zur kontaktanalogen Anzeige eines Navigationshinweises für ein Fahrmanöver, insbesondere einen Fahrspurwechsel, eines Fahrzeugs, wobei das Fahrmanöver an jeder Stelle einer zusammenhängenden Fahrstrecke einer Fahrbahn ausgeführt werden kann, umfassend: Kontaktanaloges stationäres Anzeigen des Hinweises am Beginn der Fahrstrecke, für eine erste vom Fahrzeug zurückgelegte Wegstrecke; Anpassen der kontaktanalogen Anzeige des Hinweises an die Positionsveränderung des Fahrzeugs, so dass der Hinweis seine Position entsprechend der Positionsveränderung des Fahrzeugs ändert, für eine zweite vom Fahrzeug zurückgelegte Wegstrecke; Kontaktanaloges stationäres Anzeigen des Hinweises am Ende der Fahrstrecke, für eine dritte vom Fahrzeug zurückgelegte Wegstrecke.

Auf diese Weise wird dem Fahrer an der Position, ab der das Fahrmanöver möglich ist, der Hinweis angezeigt und der Fahrer erkennt, dass das Manöver ab dort durchgeführt werden kann. Der Hinweis befindet sich stationär, also fest, an dieser Position und dient der Voranzeige des Fahrmanövers. Dieser Hinweis wird im Folgenden dann an die veränderte Position des Fahrzeugs angepasst. Insbesondere wird der Hinweis verschoben, wenn sich das das Fahrzeug der Position des zunächst stationären Hinweises nähert. Beim Fahrer entsteht somit insbesondere der Eindruck, dass die Hinweise vor dem Fahrzeug hergeschoben werden, um auf das Manöver dauerhaft hinzuweisen. Schließlich wird der Hinweis am Ende der Fahrstrecke wieder stationär angezeigt, was dem Fahrer verdeutlicht, dass er bis dahin das Fahrmanöver ausgeführt haben muss.

Der Fahrer wird somit nicht unter Druck gesetzt, das Fahrmanöver an einem bestimmten Ort auszuführen, wenn das Fahrmanöver an mehreren Stellen einer Fahrstrecke ausgeführt werden kann. Dies ermöglicht ein sicheres Fahrverhalten.

Navigationshinweise können Pfeile oder Objekte sein.

Vorteilhafterweise wird durch das Anpassen der kontaktanalogen Anzeige der Hinweis so anzeigt wird, dass er sich eine konstante Entfernung vor dem Fahrzeug zu befinden scheint. Auf diese Weise wird der Fahrer einerseits nicht gedrängt das Fahrmanöver auszuführen, andererseits wird aber die Notwendigkeit eines Manövers klar dargestellt.

In einer Variante wird der Hinweis beim Anpassen der kontaktanalogen Anzeige entlang der Fahrbahn angezeigt. Weiterhin kann dem Fahrer der Hinweis über der Fahrbahn der Fahrstrecke erscheinen.

In einer bevorzugten Weiterbildung umfasst das stationäre Anzeigen des Hinweises am Ende der Fahrstrecke ein animiertes Anzeigen des Hinweises, das insbesondere auf die letzte Möglichkeit das Fahrmanöver auszuführen hinweist. Somit wird dem Fahrer deutlich ein Ende der Möglichkeit angezeigt, das Fahrmanöver auszuführen. Die Animation kann dazu dienen den Hinweis für den Fahrer leichter von der Anpassung des Hinweises aufgrund der Positionsveränderung des Fahrzeugs unterscheidbar zu machen.

Die erste, zweite und dritte Wegstrecke sind räumlich derart angeordnet, dass sie in dieser Reihenfolge von dem Fahrzeug durchfahren werden. Mit anderen Worten sind die erste, zweite und dritte Wegstrecke für den Fahrer nacheinander angeordnet. Die Anordnung ist dabei so, dass die erste Wegstrecke vor der zusammenhängenden Fahrstrecke angeordnet ist, und/oder wobei die zweite Wegstrecke vor der zusammenhängenden Fahrstrecke beginnt und mit dieser überlappt und vor dieser endet, und/oder wobei die dritte Wegstrecke innerhalb der zusammenhängenden Fahrstrecke beginnt und mit dieser endet. Es wird somit ermöglicht, dass der Fahrer vor dem Passieren des Anfangs oder Endes der Fahrstrecke ausreichend früh vorgewarnt wird.

In Kombination mit Fahrerassistenzsystemen kann weiterhin ein optimaler Zeitpunkt für den Spurwechsel angezeigt werden. Beispielsweise durch eine Animation des Navigationshinweises.

Es wird eine Vorrichtung offenbart, umfassend ein Navigationssystem und eine zum kontaktanalogen Anzeigen eingerichtete Anzeige, wobei die Vorrichtung dazu eingerichtet ist, ein vorstehend beschriebenes Verfahren auszuführen.

### KURZE BESCHREIBUNG DER ZEICHNUNG

Fig. 1 zeigt eine beispielhafte Anzeige eines Head-up-Displays mit Navigationshinweisen in einer ersten Entfernung vor einer Kreuzung.
Fig. 2 zeigt eine beispielhafte Anzeige eines Head-Up-Displays mit Navigationshinweisen in einer zweiten Entfernung vor einer Kreuzung.

### DETAILLIERTE BESCHREIBUNG DES AUSFÜHRUNGSBEISPIELS

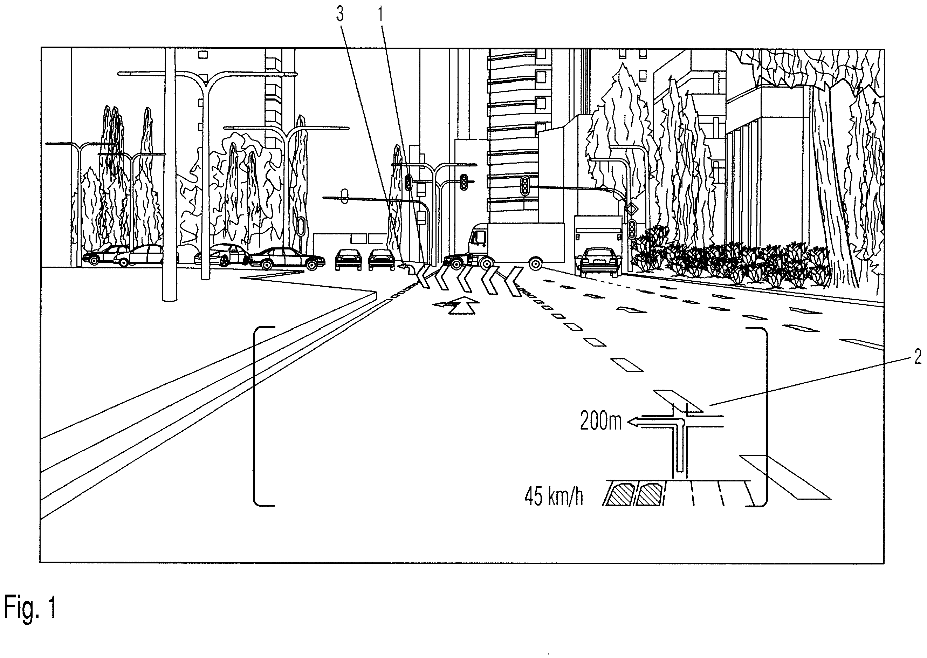

Fig. 1 zeigt eine beispielhafte Anzeige eines Head-Up-Displays mit Navigationshinweisen 1 bis 3 in einer ersten Entfernung vor einer Kreuzung. Auf die Kreuzung münden in der dargestellten Fahrtrichtung fünf Fahrspuren, wobei ein Fahrzeug zum Linksabbiegen nur auf den zwei am weitesten links angeordneten Fahrspuren fahren darf. Die drei am weitesten rechts angeordneten Fahrspuren dienen nur zum geraden Überqueren der Kreuzung beziehungsweise rechts abbiegen. Das Fahrzeug befindet sich in einer Entfernung von der Kreuzung, in der nur drei Fahrspuren parallel nebeneinander in der Fahrtrichtung vorhanden sind. Ein Navigationssystem des Fahrzeugs leitet den Fahrer entlang einer berechneten oder vorgegebenen Route. Diese Route sieht vor, dass das Fahrzeug an der nächsten Kreuzung an der Ampel links abbiegt.

Mit dem Bezugszeichen 2 sind bereits bekannte Navigationshinweise bezeichnet. Aus ihnen ist entnehmbar, dass die Route an der nächsten Kreuzung in 200m links abbiegt und dass sich das Fahrzeug dazu auf die zwei am weitesten links angeordneten Fahrspuren einordnen muss. Darüber hinaus wird die Geschwindigkeit angezeigt. Mit dem Pfeil 3 wird kontaktanalog der Ort des Abbiegens auf der Kreuzung angezeigt.

Für das Fahrmanöver des Wechselns auf eine der zwei am weitesten Links angeordneten Fahrspuren wird dem Fahrer der mit dem Bezugszeichen 2 bezeichnete Hinweis angezeigt. Dieser umfasst fünf nebeneinander angeordnete Pfeile. Der Hinweis scheint räumlich über dem Punkt der Straße zu schweben, ab dem ein Wechsel auf die beiden am weitesten links angeordneten Fahrspuren möglich ist. Dies ist der Ort, ab dem die zwei am weitesten links angeordneten Fahrspuren eröffnet werden, erkennbar anhand der in Fig. 1 nach links abknickenden Bordsteinkante und den dahinter beginnenden Fahrspuren. An diesem Ort wird der Hinweis 1 kontaktanalog und stationär für den Fahrer angezeigt, d.h. bei dem Fahrer entsteht der Eindruck er würde sich beim Weiterfahren dem Hinweis 1 nähern.

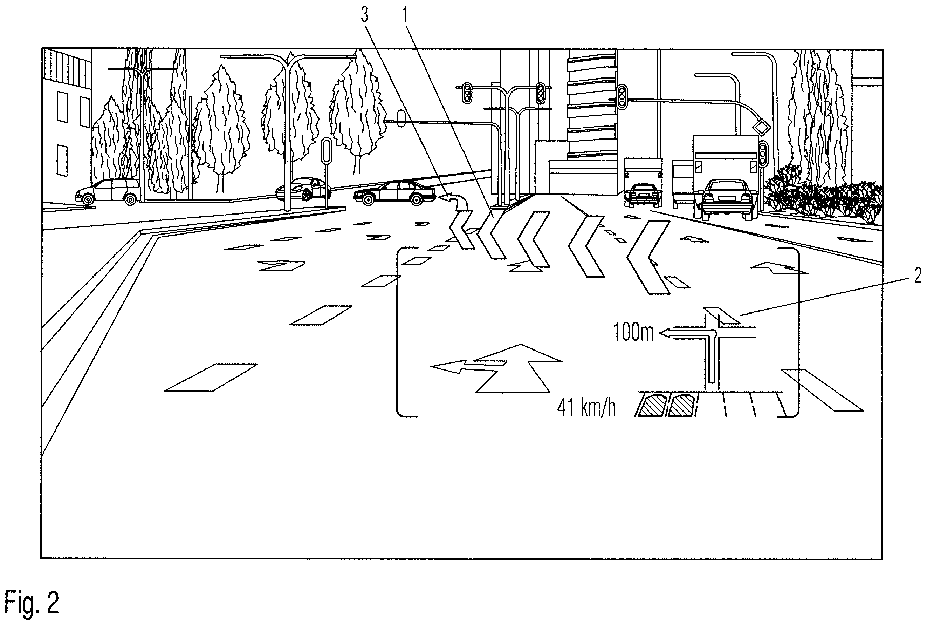

Fig. 2 zeigt eine beispielhafte Anzeige eines Head-Up-Displays mit Navigationshinweisen 1 bis 3 vor derselben Kreuzung wie der in Fig. 1 gezeigten, jedoch in einer anderen Entfernung, nämlich 100m vor der Kreuzung. Gleiche Bezugszeichen bezeichnen sich entsprechende Elemente.

Die Anzeige hat sich insofern verändert, als dass der Navigationshinweis 1, der anzeigt, dass das Fahrzeug die Fahrspur nach links wechseln soll, nicht mehr über dem Ort zu schweben scheint, an dem der Bordstein nach links abknickt beziehungsweise die zwei am weitesten links befindlichen Fahrspuren eröffnet werden, sondern etwas weiter in Richtung der Kreuzung verschoben ist. Gleichzeitig ist der Navigationshinweis 1 allerdings auch näher am Fahrzeug angeordnet, was beispielsweise durch eine Vergrößerung des Hinweises 1 dargestellt wird. Bei weiterem Fahren des Fahrzeugs auf dem mittleren Fahrstreifen wird sich der Hinweis 1 stets in dieser Entfernung vor dem Fahrzeug befinden und sich so mit diesem bewegen (bis die Möglichkeit die Fahrspur zu wechseln nicht mehr gegeben ist).

In diesem Beispiel ist der Navigationshinweis 1 stationär an seiner Position, wie in Figur 1 dargestellt geblieben, bis das Fahrzeug in der in Figur 2 gezeigten Entfernung zwischen Fahrzeug und Hinweis 1 vor dem Hinweis 1 war. Ab diesem Punkt wurde der Hinweis 1 in der in Figur 2 gezeigten Entfernung zwischen Fahrzeug und Hinweis 1 angezeigt und hat sich so mit dem Fahrzeug mit bewegt und wurde somit angepasst.

Wenn das Fahrzeug weiter geradeaus auf der derzeitigen Fahrspur fährt, wird an der Haltelinie der Ampel der Kreuzung der Hinweis 1 kontaktanalog mit dieser Haltelinie angezeigt werden. Gleichzeitig wird der Hinweis 1 animiert, indem sequentiell die Pfeile vergrößert und wieder auf die ursprüngliche Größe verkleinert werden und zwar in einer Reihenfolge von rechts nach links. Hiermit soll dem Fahrer verdeutlicht werden, dass nun die Notwendigkeit besteht an diesem Ort die Fahrspur nach links zu wechseln.

## Patentansprüche

1. Verfahren zur kontaktanalogen Anzeige eines Navigationshinweises (1) für ein Fahrmanöver, insbesondere einen Fahrspurwechsel, eines Fahrzeugs, wobei das Fahrmanöver an jeder Stelle einer zusammenhängenden Fahrstrecke einer Fahrbahn ausgeführt werden kann, umfassend:
Kontaktanaloges stationäres Anzeigen des Hinweises (1) am Beginn der Fahrstrecke, für eine erste vom Fahrzeug zurückgelegte Wegstrecke;
Anpassen der kontaktanalogen Anzeige des Hinweises (1) an die Positionsveränderung des Fahrzeugs, so dass der Hinweis seine Position entsprechend der Positionsveränderung des Fahrzeugs ändert, für eine zweite vom Fahrzeug zurückgelegte Wegstrecke;
Kontaktanaloges stationäres Anzeigen des Hinweises (1) am Ende der Fahrstrecke, für eine dritte vom Fahrzeug zurückgelegte Wegstrecke;
wobei die erste, zweite und dritte Wegstrecke räumlich derart angeordnet sind, dass sie in dieser Reihenfolge von dem Fahrzeug durchfahren werden.

2. Verfahren nach Anspruch 1, wobei durch das Anpassen der kontaktanalogen Anzeige der Hinweis (1) so anzeigt wird, dass er sich eine konstante Entfernung vor dem Fahrzeug zu befinden scheint.

3. Verfahren nach einem der vorhergehenden Ansprüche, wobei der Hinweis (1) beim Anpassen der kontaktanalogen Anzeige entlang der Fahrbahn angezeigt wird.

4. Verfahren nach einem der vorhergehenden Ansprüche, wobei der Hinweis (1) sich über der Fahrbahn der Fahrstrecke zu befinden scheint.

5. Verfahren nach einem der vorhergehenden Ansprüche, wobei das stationäre Anzeigen des Hinweises (1) am Ende der Fahrstrecke ein animiertes Anzeigen des Hinweises umfasst, das insbesondere auf die letzte Möglichkeit das Fahrmanöver auszuführen hinweist.

6. Verfahren nach einem der vorhergehenden Ansprüche, wobei die erste Wegstrecke vor der zusammenhängenden Fahrstrecke angeordnet ist, und/oder wobei die zweite Wegstrecke vor der zusammenhängenden Fahrstrecke beginnt und mit dieser überlappt und vor dieser endet, und/oder wobei die dritte Wegstrecke innerhalb der zusammenhängenden Fahrstrecke beginnt und mit dieser endet.

7. Vorrichtung umfassend ein Navigationssystem und eine zum kontaktanalogen Anzeigen eingerichtete Anzeige, wobei die Vorrichtung dazu eingerichtet ist, ein Verfahren nach einem der Ansprüche 1 bis 6 auszuführen.

## Claims

1. A method for the contact-analogue display of a navigation instruction (1) for a driving manoeuvre, more especially a lane change, of a vehicle, wherein the driving manoeuvre can be carried out at any point of a continuous route of a carriageway, comprising the following steps:
displaying the instruction (1) in a contact-analogue stationary manner at the start of the route for a first stretch travelled by the vehicle;
adapting the contact-analogue display of the instruction (1) to the change in position of the vehicle, so that the instruction changes its position in accordance with the change in position of the vehicle, for a second stretch travelled by the vehicle;
displaying the instruction (1) in a contact-analogue stationary manner at the end of the route for a third stretch travelled by the vehicle;
wherein the first, second and third stretches are arranged spatially in such a way that they are travelled through in this order by the vehicle.

2. A method according to claim 1, wherein, by the adaptation of the contact-analogue display, the instruction (1) is displayed such that it appears to be disposed at a constant distance in front of the vehicle.

3. A method according to any one of the preceding claims, wherein the instruction (1) is displayed along the carriageway with the adaptation of the contact-analogue display.

4. A method according to any one of the preceding claims, wherein the instruction (1) appears to be disposed above the carriageway of the route.

5. A method according to any one of the preceding claims, wherein the stationary display of the instruction (1) at the end of the route comprises an animated display of the instruction, which more especially indicates the last possibility to carry out the driving manoeuvre.

6. A method according to any one of the preceding claims, wherein the first stretch is arranged before the continuous route, and/or wherein the second stretch starts before the continuous route and overlaps therewith and ends before it, and/or wherein the third stretch starts within the continuous route and ends therewith.

7. A device comprising a navigation system and a display designed for contact-analogue display, wherein the device is designed to carry out a method according to any one of claims 1 to 6.

## Revendications

1. Procédé d'affichage analogique de contact d'une indication de navigation (1) pour une manoeuvre de conduite, en particulier un changement de voie de circulation d'un véhicule, la manoeuvre de conduite pouvant être mise en oeuvre à n'importe quel endroit d'un parcours considéré d'une chaussée, comprenant des étapes consistant à :
- effectuer un affichage stationnaire analogique de contact de l'indication (1) au début du parcours pour un premier chemin parcouru par le véhicule,
- adapter l'affichage analogique de contact de l'indication (1) à la modification de la position du véhicule, de sorte que l'indication modifie sa position conformément à la modification de la position du véhicule pour un second chemin parcouru par le véhicule,
- effectuer un affichage stationnaire analogique de contact, de l'indication (1) à la fin du parcours pour un troisième chemin parcouru par le véhicule,
- le premier, le second et le troisième chemins étant situés dans l'espace de sorte qu'ils soient empruntés dans cet ordre par le véhicule.

2. Procédé conforme à la revendication 1,
selon lequel par l'adaptation de l'affichage analogique de contact, l'indication (1) est affichée de sorte qu'elle semble être située à une distance constante à l'avant du véhicule.

3. Procédé conforme à l'une des revendications précédentes,
selon lequel lors de l'adaptation de l'affichage analogique de contact, l'indication (1) est affichée le long de la chaussée.

4. Procédé conforme à l'une des revendications précédentes,
selon lequel l'indication (1) semble être située sur la chaussée du parcours.

5. Procédé conforme à l'une des revendications précédentes,
selon lequel l'affichage stationnaire de l'indication (1), à la fin du parcours comporte un affichage animé de l'indication qui concerne en particulier la dernière possibilité pour effectuer la manoeuvre de conduite.

6. Procédé conforme à l'une des revendications précédentes,
selon lequel le premier chemin est situé à l'avant du parcours concerné, et/ou le second chemin commence avant le parcours concerné se chevauche avec celui-ci et se termine avant lui, et/ou le troisième chemin commence à l'intérieur du parcours concerné et se termine avec celui-ci.

7. Dispositif comprenant un système de navigation ainsi qu'un affichage permettant des affichages analogiques de contact, ce dispositif étant susceptible de mettre en oeuvre un procédé conforme à l'une des revendications 1 à 6.
